# EUROPÄISCHE PATENTSCHRIFT

(11) **EP 3 010 760 B1**
(45) Veröffentlichungstag und Bekanntmachung des Hinweises auf die Patenterteilung: **23.08.2017**
(21) Anmeldenummer: 14729855.8
(22) Anmeldetag: 24.05.2014
(51) Int. Cl.: B60R 1/06

(54) **RAHMENLOSER SPIEGEL UND ZUGEHÖRIGES MONTAGEVERFAHREN**
FRAMELESS MIRROR AND ASSOCIATED MOUNTING METHOD
MIROIR SANS CADRE ET PROCÉDÉ DE MONTAGE ASSOCIÉ

(30) Priorität: 18.06.2013 DE 102013010270
(43) Veröffentlichungstag der Anmeldung: 27.04.2016
(73) Patentinhaber: Audi AG, 85045 Ingolstadt (DE); Volkswagen AG, 38436 Wolfsburg (DE)
(72) Erfinder: BING, Michael, 85117 Eitensheim (DE); ALMELDA, Pedro, 38479 Tappenbeck (DE); STEGE, Jörg, 38524 Sassenburg (DE)
(86) Internationale Anmeldenummer: PCT/EP2014/001412
(87) Internationale Veröffentlichungsnummer: WO 2014/202175

(56) Entgegenhaltungen:
- EP-A1- 1 216 883
- EP-A1- 2 505 433
- WO-A1-2011/044312
- DE-A1- 3 641 363
- DE-A1- 19 720 808
- US-A1- 2011 080 667

## Beschreibung

Die Erfindung betrifft ein Montageverfahren für einen rahmenlosen Spiegel, bei dem ein Spiegelglas auf einer Trägerplatte befestigt wird.

Ein derartiger rahmenloser Spiegel kann insbesondere als Außenspiegel eines Kraftfahrzeugs verwendet werden. Herkömmliche Spiegel weisen zumeist eine Trägerplatte mit einem angeformten Rand auf, innerhalb dieses Rands wird ein Spiegelglas befestigt. Alternativ wird das Glas durch einen aufwändigen und schwer beherrschbaren Prozess positioniert.

EP 1 216 883 A1 beschreibt einen Rückblickspiegel für Kraftfahrzeuge. Der Rückspiegel umfasst ein Spiegelgehäuse, einen Spiegelgehäuserahmen, ein Spiegelelement und eine Klemmverbindung mit zwei Klemmteilen zum Verbinden des Rückspiegels mit einem Spiegelhalteteil. Bei einem derartigen Rückspiegel ist keine Trägerplatte notwendig, wodurch das Gewicht des Rückspiegels verringert werden kann.

In der DE 197 20 808 A1 wird eine Spiegelbaugruppe für einen Fahrzeugaußenspiegel mit einer Spiegelplatte beschrieben, auf deren Rückseite ein flächiges elektrisches Heizelement mit elektrischen Anschlusskontakten aufgebracht ist. Zudem wird ein Verfahren zur Herstellung einer solchen Spiegelbaugruppe beschrieben.

EP 2 505 433 A1 schlägt einen Spiegelkopf bzw. Innenrückspiegel einer Innenrückspiegelanordnung für ein Kraftfahrzeug vor, der einen Schutz der reflektierenden Beschichtung vor Beschädigung aufweist. Hierzu ist vorgesehen, dass die reflektierende Beschichtung zwischen einer opaken Beschichtung und der Rückseite eines Glasträgers eingeschlossen ist.

US 2011/080667 A1 beschreibt eine Glaseinheit umfassend eine Spiegelscheibe, die auf einer Glasträgerplatte fixiert ist. Dadurch, dass nur über die Randzone der Glasträgerplatte verteilte Haltestege angeordnet sind, wird eine positionsgenaue Fixierung der Spiegelscheibe auf der Glasträgerplatte ermöglicht.

In der WO 2011/044 312 A1 wird eine Innenrückspiegelbaugruppe mit einem Gehäuse und einer Spiegelfläche bestehend aus einem Glassubstrat vorgeschlagen. Die Innenrückspiegelbaugruppe umfasst ein elektro-optisches reflektierendes Element, das an dem Gehäuse oder an einem Rand des Gehäuses angebracht ist.

DE 36 41 363 A1 offenbart ein Montageverfahren gemäß dem Oberbegriff vom Anspruch 1 und einen rahmenlosen Spiegel gemäß dem Oberbegriff vom Anspruch 8. Es ist bereits vorgeschlagen worden, rahmenlose Spiegel als Außenspiegel für Kraftfahrzeuge zu verwenden, da diese sich durch eine besonders ansprechende Optik auszeichnen und wegen des fehlenden Rahmens eine geringere Größe aufweisen. Bei der Montage eines rahmenlosen Spiegels ist es allerdings erforderlich, ein Spiegelglas mit hoher Genauigkeit auf einer Trägerplatte zu befestigen, damit die geforderten Toleranzen eingehalten werden.

Die exakte Positionierung des Spiegelglases auf der Trägerfläche ist daher in der Praxis sehr aufwendig, zumal eine nachträgliche Korrektur durch Verschieben der Trägerplatte kaum möglich ist.

Der Erfindung liegt daher die Aufgabe zugrunde, ein Montageverfahren für einen rahmenlosen Spiegel anzugeben, durch das ein Spiegelglas einfach und dennoch passgenau auf einer Trägerplatte befestigt werden kann.

Zur Lösung dieser Aufgabe ist ein Verfahren der eingangs genannten Art mit den folgenden Schritten vorgesehen: Verwenden einer einen Rand aufweisenden Trägerplatte, Positionieren und Aufkleben des Spiegels auf der Spiegelplatte, indem der Rand als Anschlag benutzt wird, und Abtrennen des eine Sollbruchstelle aufweisenden Rands von der Trägerplatte.

Die Erfindung beruht auf der Idee, dass zum Positionieren des Spiegelglases auf der Trägerplatte ein temporär vorhandener Rand verwendet werden kann, der nach dem Aufkleben des Spiegelglases entfernt wird. Durch das erfindungsgemäße Verfahren kann ein Spiegelglas passgenau auf einer Trägerplatte montiert werden, ohne dass zusätzliche aufwendige Vorrichtungen erforderlich sind. Nach dem Aufkleben kann der lediglich temporär benötigte Rand entfernt werden, da dieser über eine Sollbruchstelle mit der Trägerplatte verbunden ist.

Gemäß einer Variante des erfindungsgemäßen Verfahrens kann eine Trägerplatte mit einem umlaufenden Rand verwendet werden. Demnach kann der umlaufende Rand als Anschlag oder Anlegekante für die Außenseite des Spiegelglases verwendet werden. Die mit dem Rand versehene Trägerplatte weist dadurch eine Vertiefung auf, in die das Spiegelglas höchst einfach geklebt werden kann. Da die Positionierung über den Rahmen erfolgt, ergibt sich der Vorteil, dass eingerichtete Montageprozesse beibehalten werden können.

Alternativ kann bei dem erfindungsgemäßen Montageverfahren eine Trägerplatte mit einem abschnittsweise ausgebildeten Rand mit mehreren Randabschnitten verwendet werden. Bei dieser Variante ist der Rand nicht durchgehend ausgebildet, stattdessen sind mehrere voneinander beabstandete Randabschnitte vorgesehen, z. B. mehrere einander paarweise gegenüberliegende Randabschnitte. Mittels der Sollbruchstelle kann der Rand, der die mehreren Randabschnitte aufweist, nach dem Fixieren des Spiegelglases auf der Trägerplatte entfernt werden.

Es liegt auch im Rahmen der Erfindung, dass bei dem Montageverfahren eine zwischen der Trägerplatte und dem Rahmen ausgebildete Sollbruchstelle verwendet wird, die einen oder mehrere Abschnitte mit verringertem Durchmesser aufweist. Die Funktion der Sollbruchstelle ist dabei derart, dass ein Abschnitt mit verringertem Durchmesser durch eine bestimmte aufgebrachte Zugkraft abgetrennt oder abgerissen werden kann, wodurch der Rand von der Trägerplatte entfernt wird. Nach dem Abreißen ist das Spiegelglas passgenau auf der Trägerplatte befestigt, vorzugsweise ragt das Spiegelglas über die Trägerplatte hinaus, wodurch der rahmenlose Spiegel gebildet wird. Die Kanten des Spiegelglases können umlaufend geschliffen sein.

Gemäß einer Weiterbildung des erfindungsgemäßen Montageverfahrens kann es vorgesehen sein, dass eine zwischen der Trägerplatte und dem Rahmen angeordnete Sollbruchstelle verwendet wird, die als Perforierung ausgebildet ist. Bei einer Perforierung sind voneinander beabstandete Öffnungen in Form von Schlitzen, Löchern oder mit anderen Formen zwischen der Trägerplatte und dem Rand vorgesehen, wodurch an dieser Stelle eine Schwachstelle geschaffen wird, die die Funktion einer Sollbruchstelle hat und das Abtrennen des Rands nach der Befestigung des Spiegelglases erleichtert.

Bei dem erfindungsgemäßen Montageverfahren kann optional ein Heizelement zwischen der Trägerplatte und dem Spiegelglas angeordnet werden.

Um das Abtrennen des Rands nach der Montage zu erleichtern, kann es erfindungsgemäß vorgesehen sein, dass eine Trägerplatte mit einem Rand verwendet wird, der einen zum Abtrennen des Rands greifbaren Fortsatz aufweist. Dieser Fortsatz kann randseitig im Bereich der Sollbruchstelle angeordnet sein und ermöglicht ein einfaches Greifen, sodass der abreißbare Rand der Sollbruchstelle von der Trägerplatte getrennt werden kann.

Daneben betrifft die Erfindung einen rahmenlosen Spiegel mit einem auf einer Trägerplatte befestigten Spiegelglas.

Der erfindungsgemäße rahmenlose Spiegel zeichnet sich dadurch aus, dass die Trägerplatte einen Rand aufweist, der beim Positionieren und Aufkleben des Spiegelglases auf der Trägerplatte als Anschlag dient und der eine Sollbruchstelle zum Abtrennen des Rands von der Trägerplatte aufweist.

In den Unteransprüchen sind weitere Ausgestaltungen der Erfindung beschrieben.

Weitere Vorteile und Einzelheiten der Erfindung werden nachfolgend anhand von Ausführungsbeispielen unter Bezugnahme auf die Zeichnungen erläutert. Die Zeichnungen sind schematische Darstellungen und zeigen:
- Fig. 1: einen herkömmlichen rahmenlosen Spiegel;
- Fig. 2: eine geschnittene Seitenansicht des Spiegels von Fig. 1;
- Fig. 3: eine geschnittene Seitenansicht eines erfindungsgemäßen rahmenlosen Spiegels;
- Fig. 4: eine weitere Ansicht des Spiegels von Fig. 3 während der Montage;
- Fig. 5: den erfindungsgemäßen Spiegel nach dem Abtrennen des Rands;
- Fig. 6: ein Detail des Spiegels von Fig. 5;
- Fig. 7: ein Detail eines weiteren Ausführungsbeispiels eines erfindungsgemäßen Spiegels; und
- Fig. 8: ein Detail eines weiteren Ausführungsbeispiels eines erfindungsgemäßen Spiegels.

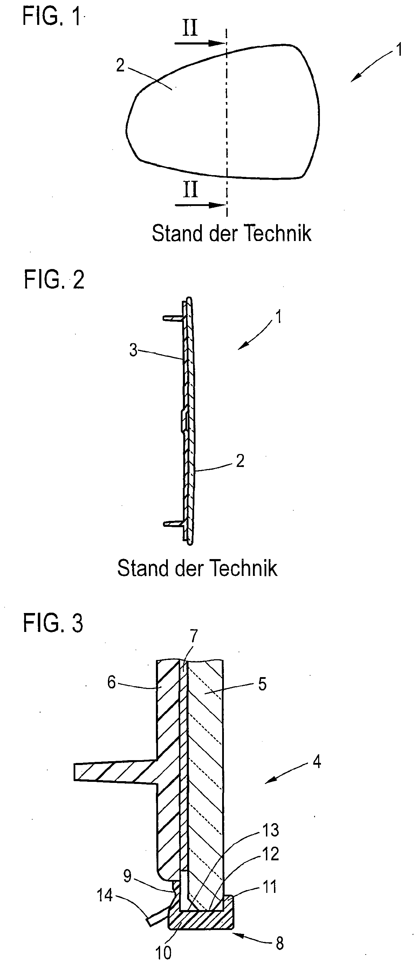

Fig. 1 zeigt einen herkömmlichen rahmenlosen Spiegel 1, Fig. 2 ist eine geschnittene Seitenansicht des Spiegels 1, der als Außenspiegel in einem Kraftfahrzeug verwendet werden kann. Der Spiegel 1 umfasst ein Spiegelglas 2, das auf einer Trägerplatte 3 befestigt ist. Damit dessen ordnungsgemäße Funktion gewährleistet ist, ist es erforderlich, das Spiegelglas 2 mit hoher Genauigkeit auf der Trägerplatte 3 zu positionieren und aufzukleben.

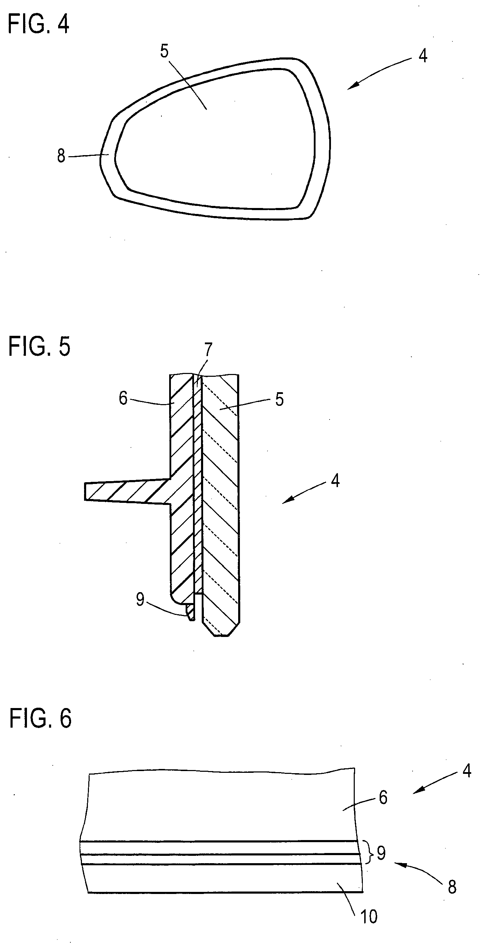

Die Fig. 3 und 4 zeigen ein erstes Ausführungsbeispiel eines rahmenlosen Spiegels, wobei Fig. 3 eine geschnittene Seitenansicht und Fig. 4 eine Ansicht auf das Spiegelglas bei der Montage ist.

Der rahmenlose Spiegel 4 umfasst ein Spiegelglas 5, das auf einer Trägerplatte 6 befestigt wird. Zwischen der Trägerplatte 6 und dem Spiegelglas 5 ist ein flächiges elektrisches Heizelement 7 angeordnet. Das Heizelement 7 ist jedoch optional, es sind auch Ausführungen möglich, bei denen das Spiegelglas direkt auf der Trägerplatte 6 aufgebracht ist. Bei der Montage des rahmenlosen Spiegels 4 wird das Spiegelglas 5 auf der Trägerplatte 6 befestigt, indem eine einen Rand 8 aufweisende Trägerplatte 6 verwendet wird. In der geschnittenen Ansicht von Fig. 3 erkennt man, dass der Rand 8 als Profil ausgebildet ist, das aus einem Abschnitt 9 mit verringertem Durchmesser besteht, an den sich ein mittlerer Abschnitt 10 anschließt, der sich näherungsweise senkrecht von dem Abschnitt 9 mit verringertem Durchmesser und senkrecht zur Oberfläche der Trägerplatte 6 erstreckt. Der mittlere Abschnitt 10 umgibt das Spiegelglas 5 somit außenseitig. An den mittleren Abschnitt 10 schließt sich ein nach innen bzw. zum Zentrum der Trägerplatte 6 gerichteter abgewinkelter Endabschnitt 11 an. Der Rand 8 umfasst somit den Abschnitt 9 mit verringertem Durchmesser, den mittleren Abschnitt 10 und den Endabschnitt 11, zwischen denen jeweils zumindest näherungsweise ein rechter Winkel gebildet ist, sodass der Rand 8 insgesamt näherungsweise C-förmig ausgebildet ist.

In Fig. 4 erkennt man, dass der Rand 8 umlaufend ausgebildet ist, sodass er die Trägerplatte 6 während der Positionierung und Montage des Spiegelglases 5 vollständig umgibt.

Bei der Montage des rahmenlosen Spiegels 4 wird das Spiegelglas 5 auf der Trägerplatte 6 positioniert, indem der Rand 8 als Anschlag benutzt wird. Der Rand 8 ist aus einem Kunststoffmaterial hergestellt, das eine gewisse Elastizität aufweist, sodass das Spiegelglas 5 in die von dem Rand 8 gebildete umlaufende seitliche Nut eingesetzt werden kann. Das Spiegelglas 5 liegt mit seinen Außenkanten 12 dabei an der Innenseite 13 des mittleren Abschnitts 10 an, sodass das Spiegelglas 5 rundherum gestützt ist und einfach und dennoch präzise positioniert wird. Obwohl der Rand 8 eine gewisse Elastizität aufweist, weist er eine ausreichende Steifigkeit auf, damit das Spiegelglas 5 beim Einsetzen in den Rand 8 automatisch mit hoher Genauigkeit positioniert wird.

Zwischen dem Abschnitt 9 mit verringertem Durchmesser und dem mittleren Abschnitt 10 weist der Rand 8 einen Fortsatz 14 auf, an dem der Rand 8 gegriffen werden kann, um den Rand 8 nach erfolgtem Aufkleben des Spiegelglases 5 auf der Trägerplatte 6 abzureißen. Der Abschnitt 9 mit verringertem Durchmesser dient dabei als Sollbruchstelle, in dem Bereich des verringerten Durchmessers kann der Rand 8 durch eine aufgebrachte Zugkraft abgerissen werden. Der Rand 8 weist einen umlaufenden Abschnitt 9 mit verringertem Durchmesser auf, sodass der Rand 8 rundherum abgetrennt werden kann.

Fig. 5 ist eine geschnittene Seitenansicht und zeigt den rahmenlosen Spiegel 4 nach dem Abtrennen des Rands 8. In Fig. 5 erkennt man, dass von dem Rand lediglich noch ein Teil des Abschnitts 9 mit verringertem Durchmesser vorhanden ist, die übrigen Teile des Rands 8, nämlich der mittlere Abschnitt 10 und der Endabschnitt wurden durch Abtrennen entfernt. Das Spiegelglas 5 überragt die Trägerplatte 6 an allen Seiten, wodurch der rahmenlose Spiegel 5 gebildet wird.

Fig. 6 zeigt ein Detail des rahmenlosen Spiegels 4 vor dem Abreißen des Rands. In Fig. 6 erkennt man, dass sich an der Unterseite der Trägerplatte 6 der Abschnitt 9 mit verringertem Durchmesser anschließt. In dem Bereich des kleinsten Durchmessers ist eine Kante sichtbar. An dem Abschnitt 9 mit verringertem Durchmesser schließt sich der mittlere Abschnitt 10 des Rahmens 8 an.

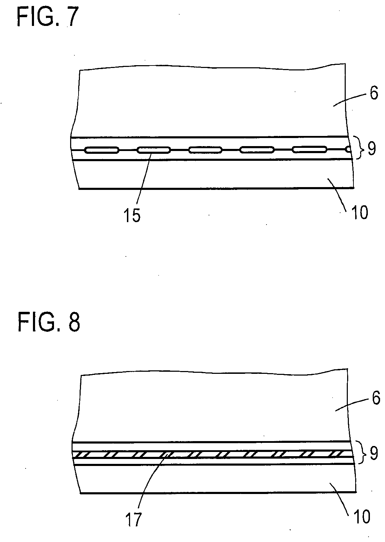

Fig. 7 zeigt ein Detail eines weiteren Ausführungsbeispiels eines Spiegels, bei dem der Abstand 9 mit verringertem Durchmesser eine Perforierung mit Löchern 15 aufweist. Diese Perforierung wirkt als Sollbruchstelle, sodass der mittlere Abschnitt 10 des Rands entlang der Perforierung leicht abgetrennt werden kann.

Fig. 8 zeigt ein Detail eines weiteren Ausführungsbeispiels eines Spiegels, bei dem in dem Abschnitt 9 mit verringertem Durchmesser Stege 17 vorgesehen sind, über die die Trägerplatte 6 mit dem mittleren Abschnitt 10 des Rands verbunden ist. Nach dem Positionieren des Spiegelglases kann der mittlere Abschnitt 10 durch Aufbringen einer Zugkraft abgetrennt werden, dabei reißen die Stege 17 ab, wodurch der rahmenlose Spiegel gebildet wird.

## Patentansprüche

1. Montageverfahren für einen rahmenlosen Spiegel, bei dem ein Spiegelglas auf einer Trägerplatte befestigt wird,
**gekennzeichnet durch** die folgenden Schritte:
- Verwenden einer einen Rand aufweisenden Trägerplatte;
- Positionieren und Aufkleben des Spiegelglases auf der Trägerplatte, indem der Rand als Anschlag benutzt wird; und
- Abtrennen des eine Sollbruchstelle aufweisenden Rands von der Trägerplatte.

2. Montageverfahren nach Anspruch 1,
**dadurch gekennzeichnet,**
**dass** eine Trägerplatte mit einem umlaufenden Rand verwendet wird.

3. Montageverfahren nach Anspruch 1,
**dadurch gekennzeichnet,**
**dass** eine Trägerplatte mit einem abschnittsweise ausgebildeten Rand mit mehreren Randabschnitten verwendet wird.

4. Montageverfahren nach einem der vorangehenden Ansprüche,
**dadurch gekennzeichnet,**
**dass** eine zwischen der Trägerplatte und dem Rahmen ausgebildete Sollbruchstelle verwendet wird, die einen oder mehrere Abschnitte mit verringertem Durchmesser aufweist.

5. Montageverfahren nach einem der vorangehenden Ansprüche,
**dadurch gekennzeichnet,**
**dass** eine zwischen der Trägerplatte und dem Rahmen angeordnete Sollbruchstelle verwendet wird, die als Perforierung ausgebildet ist.

6. Montageverfahren nach einem der vorangehenden Ansprüche,
**dadurch gekennzeichnet,**
**dass** zwischen der Trägerplatte und dem Spiegelglas ein Heizelement angeordnet wird.

7. Montageverfahren nach einem der vorangehenden Ansprüche,
**dadurch gekennzeichnet,**
**dass** eine Trägerplatte mit einem Rand verwendet wird, der einen zum Abtrennen des Rands greifbaren Fortsatz aufweist.

8. Rahmenloser Spiegel (4) mit einem auf einer Trägerplatte (6) befestigten Spiegelglas (5),
**dadurch gekennzeichnet,**
**dass** die Trägerplatte (6) einen Rand (8) aufweist, der beim Positionieren und Aufkleben des Spiegelglases (5) auf der Trägerplatte (6) als Anschlag dient und der eine Sollbruchstelle zum Abtrennen des Rands (8) von der Trägerplatte (6) aufweist.

9. Rahmenloser Spiegel nach Anspruch 8,
**dadurch gekennzeichnet,**
**dass** die Trägerplatte (6) einen umlaufenden Rand (8) oder einen abschnittsweise ausgebildeten Rand mit mehreren Randabschnitten aufweist.

10. Rahmenloser Spiegel nach Anspruch 8 oder 9,
**dadurch gekennzeichnet,**
**dass** die Sollbruchstelle einen oder mehrere Abschnitte (9) mit verringertem Durchmesser aufweist.

## Claims

1. Assembly method for a frameless mirror in which a mirror glass is fastened to a carrier plate, **characterised by** the following steps:
- using a carrier plate comprising an edge;
- positioning and adhering the mirror glass to the carrier plate by using the edge as a stop; and
- separating the edge comprising a target break point from the carrier plate.

2. Assembly method according to claim 1,
**characterised in that**
a carrier plate with a circumferential edge is used.

3. Assembly method according to claim 1,
**characterised in that**
a carrier plate is used with an edge formed in sections with a plurality of edge sections.

4. Assembly method according to any one of the preceding claims,
**characterised in that**
a target break point formed between the carrier plate and the frame is used which comprises one or a plurality of sections with reduced diameter.

5. Assembly method according to any one of the preceding claims,
**characterised in that**
a target break point arranged between the carrier plate and the frame is used which is formed as a perforation.

6. Assembly method according to any one of the preceding claims,
**characterised in that**
a heating element is arranged between the carrier plate and the mirror glass.

7. Assembly method according to any one of the preceding claims,
**characterised in that**
a carrier plate with an edge is used which has a projection that can be gripped to separate the edge.

8. Frameless mirror (4) with a mirror glass (5) fastened to a carrier plate (6),
**characterised in that**
the carrier plate (6) has an edge (8) which serves as a stop when positioning and adhering the mirror glass (5) on the carrier plate (6) and which has a target break point to separate the edge (8) from the carrier plate (6).

9. Frameless mirror according to claim 8,
**characterised in that**
the carrier plate (6) has a circumferential edge (8) or an edge formed in sections with a plurality of edge sections.

10. Frameless mirror according to claim 8 or 9,
**characterised in that**
the target break point has one or a plurality of sections (9) with reduced diameter.

## Revendications

1. Procédé de montage pour un miroir sans cadre, dans lequel un verre de miroir est fixé sur une plaque de support,
**caractérisé par** les étapes suivantes :
- utiliser une plaque de support comportant un bord ;
- positionner et coller le verre de miroir sur la plaque de support en utilisant le bord comme butée ; et
- séparer le bord, qui comporte une zone destinée à la rupture, de la plaque de support.

2. Procédé de montage selon la revendication 1, **caractérisé en ce qu'**on utilise une plaque de support avec un bord périphérique.

3. Procédé de montage selon la revendication 1, **caractérisé en ce qu'**on utilise une plaque de support avec un bord réalisé par tronçons et comportant plusieurs tronçons de bord.

4. Procédé de montage selon l'une des revendications précédentes, **caractérisé en ce qu'**on utilise une zone destinée à la rupture qui est réalisée entre la plaque de support et le cadre et qui comporte un ou plusieurs tronçons ayant un diamètre réduit.

5. Procédé de montage selon l'une des revendications précédentes, **caractérisé en ce qu'**on utilise une zone destinée à la rupture qui est réalisée entre la plaque de support et le cadre et qui est conçue comme une perforation.

6. Procédé de montage selon l'une des revendications, **caractérisé en ce qu'**un élément de chauffage est agencé entre la plaque de support et le verre de miroir.

7. Procédé de montage selon l'une des revendications précédentes, **caractérisé en ce qu'**on utilise une plaque de support avec un bord qui comporte un prolongement pouvant être saisi pour séparer le bord.

8. Miroir sans cadre (4) avec un verre de miroir (5) fixé sur une plaque de support (6), **caractérisé en ce que** la plaque de support (6) comporte un bord (8) qui sert de butée lors du positionnement et du collage du verre de miroir (5) sur la plaque de support (6) et qui comporte une zone destinée à la rupture pour séparer le bord (8) de la plaque de support (6).

9. Miroir sans cadre selon la revendication 8, **caractérisé en ce que** la plaque de support (6) comporte un bord (8) périphérique ou un bord réalisé par tronçons et comportant plusieurs tronçons de bord.

10. Miroir sans cadre selon la revendication 8 ou 9, **caractérisé en ce que** la zone destinée à la rupture comporte un ou plusieurs tronçons (9) ayant un diamètre réduit.
